# EUROPEAN PATENT APPLICATION

(11) **EP 4 528 603 A1**
(43) Date of publication of application: **26.03.2025**
(21) Application number: 23863153.5
(22) Date of filing: 04.09.2023
(51) Int. Cl.: G06N 20/00

(54) **TRAINING SYSTEM, TRAINING METHOD, TRAINING PROGRAM, AND AUTONOMOUS CONTROL DEVICE**

(30) Priority: 06.09.2022 JP 2022141583
(71) Applicant: Mitsubishi Heavy Industries, Ltd., Tokyo 100-8332 (JP)
(72) Inventor: KARAKAMA, Sotaro, Tokyo 100-8332 (JP); MATSUNAMI, Natsuki, Tokyo 100-8332 (JP); ITO, Masayuki, Tokyo 100-8332 (JP)
(74) Representative: Hoffmann Eitle
(86) International application number: PCT/JP2023/032264
(87) International publication number: WO 2024/053615

(57) **Abstract**

Provided is a training system comprising a processing unit for the reinforcement training of an agent that controls an object to be controlled, wherein the processing unit repeatedly executes steps up to updating a policy as evaluation steps on the basis of remuneration obtained by the agent in a prescribed state by executing a prescribed action in a prescribed environment, the updating of the evaluation steps being defined as event-driven, where a transition of the object being controlled from a first environment state to a predefined second environment state when the agent executes a prescribed action is employed as an event.

## Description

### Technical Field

The present disclosure relates to a learning system, a learning method, a learning program, and an autonomous control device.

### Background Art

In the related art, a reinforcement learning device is known that updates a learning model whenever a time variable t set as a unit time elapses (for example, see PTL 1).

### Citation List

### Patent Literature

[PTL 1] Japanese Unexamined Patent Application Publication No. 2020-119008

### Summary of Invention

### Technical Problem

In general, in reinforcement learning, as in PTL 1, learning is often performed while defining a control period or an action decision period that is considered to be sufficiently short in a problem to be applied as one step (unit time in learning). Here, in a case where an action decision problem for a control target is handled by reinforcement learning, the time until the decided action is executed is different depending on the type of the action of the control target. For example, in a case where the control target is an unmanned aerial vehicle and an action of imaging with a camera is decided as the action, it usually takes a few tenths of a second from the decision to the completion of the action. On the other hand, in a case where an action of turning to the right is decided as the action, it takes a few seconds from the decision to the completion of the action. In a case of an action decision problem in which the cases where the times required to execute the decided actions are different are mixed, a unit time based on a few tenths of a second of the action decision problem having a shorter time interval is adopted as the unit time of one step.

As described above, in a case where, among the actions of the agent that controls the control target, there is an action that takes time longer than one step to reflect in the environment, it is necessary to output the same action over a plurality of steps in order to enable the agent to recognize a change in the environment in response to the action. However, while the same action is being output, learning is performed using similar learning data (a set of an action, a state, and a reward), resulting in low learning efficiency.

Therefore, an object of the present disclosure is to provide a learning system, a learning method, a learning program, and an autonomous control device that can efficiently execute reinforcement learning.

Solution to Problem

According to the present disclosure, there is provided a learning system including a processing unit that performs reinforcement learning on an agent that controls a control target. The processing unit repeatedly executes, as an evaluation step, a step up to updating a policy on the basis of a reward obtained by execution of a predetermined action by the agent in a predetermined state in a predetermined environment, and update of the evaluation step is defined as event-driven in which a transition of the control target from a first environment state to a predetermined second environment state when the agent executes the predetermined action is defined as an event.

According to the present disclosure, there is provided a learning method executed in a learning system that performs reinforcement learning on an agent that controls a control target. The learning method includes causing the learning system to repeatedly execute, as an evaluation step, a step up to updating a policy on the basis of a reward obtained by execution of a predetermined action by the agent in a predetermined state in a predetermined environment. Update of the evaluation step is defined as event-driven in which a transition of the control target from a first environment state to a predetermined second environment state when the agent executes the predetermined action is defined as an event.

According to the present disclosure, there is provided a learning program executed in a learning system that performs reinforcement learning on an agent that controls a control target. The learning program causes the learning system to repeatedly execute, as an evaluation step, a step up to updating a policy on the basis of a reward obtained by execution of a predetermined action by the agent in a predetermined state in a predetermined environment. Update of the evaluation step is defined as event-driven in which a transition of the control target from a first environment state to a predetermined second environment state when the agent executes the predetermined action is defined as an event.

According to the present disclosure, there is provided an autonomous control device including a control unit in which an agent controls a control target on the basis of a learned policy. The control unit repeatedly executes, as an execution step, a step up to when the agent selects a predetermined action from the policy on the basis of an environment state of the control target and outputs the predetermined action, and update of the execution step is defined as event-driven in which a transition of the control target from a first environment state to a predetermined second environment state when the agent executes the predetermined action is defined as an event.

### Advantageous Effects of Invention

According to the present disclosure, it is possible to efficiently execute reinforcement learning.

### Brief Description of Drawings

Fig. 1 is a diagram schematically showing a learning system according to the present embodiment.
Fig. 2 is a diagram showing a flow related to a learning method according to the present embodiment.
Fig. 3 is a diagram schematically showing an autonomous control device according to the present embodiment.
Fig. 4 is a diagram showing a flow related to autonomous control according to the present embodiment.

### Description of Embodiments

Hereinafter, an embodiment according to the present disclosure will be described in detail with reference to the drawings. Further, the present disclosure is not limited by this embodiment. In addition, components in the embodiment described below include those that can be easily replaced by those skilled in the art or those that are substantially the same. Further, the components described below can be combined as appropriate. Furthermore, in a case where there are a plurality of embodiments, the embodiments can be combined.

### [Present Embodiment]

A learning system 1 according to the present embodiment is a system that performs reinforcement learning on an agent A that controls a control target. The control target is, for example, an unmanned aerial vehicle or a steam turbine plant and is not particularly limited. Further, in the following description, a case where an unmanned aerial vehicle is applied as the control target will be described.

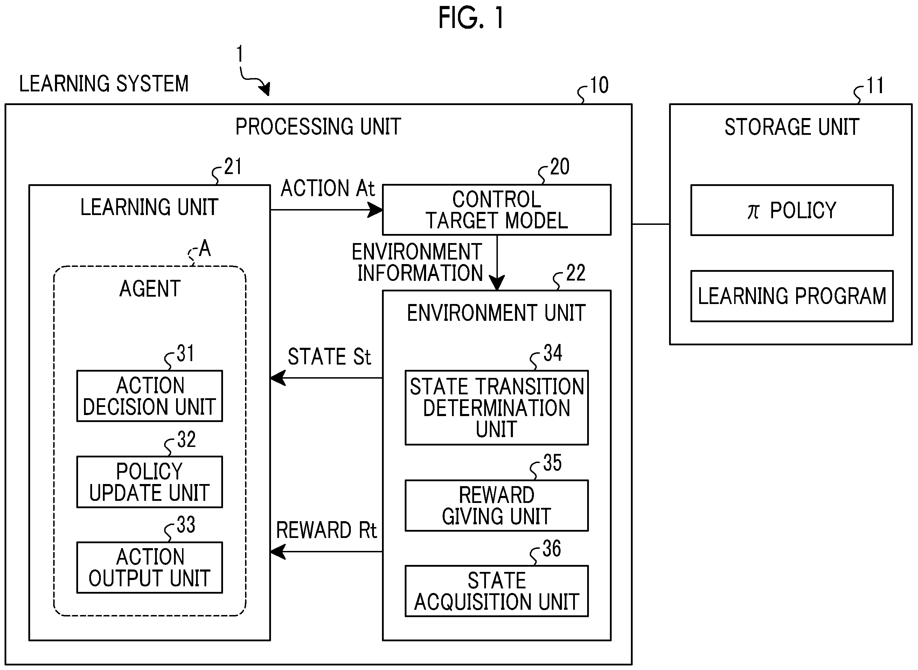

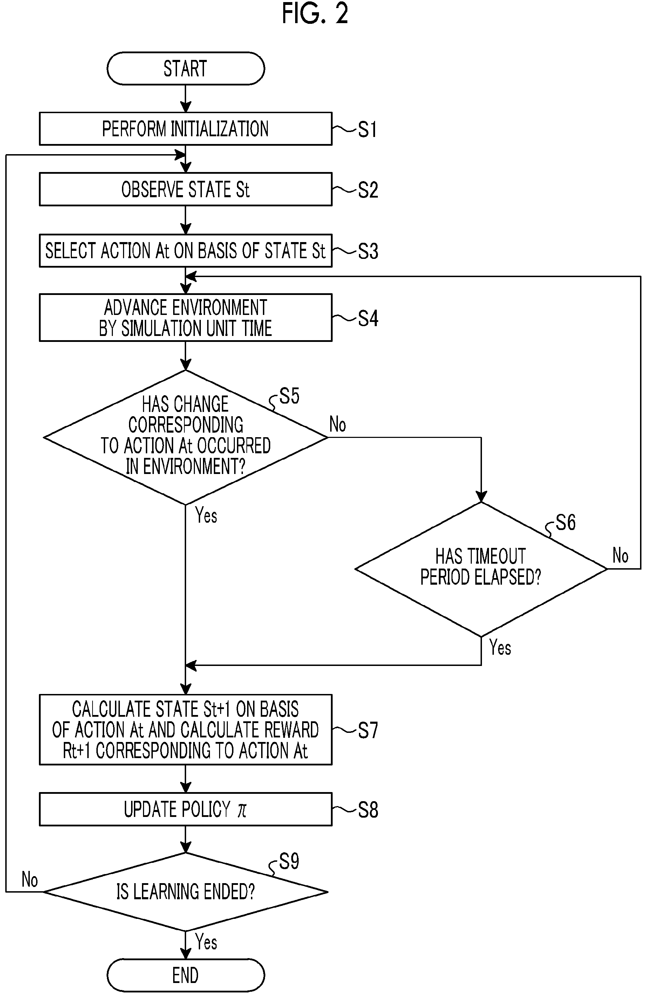

Fig. 1 is a diagram schematically showing the learning system according to the present embodiment. Fig. 2 is a diagram showing a flow related to a learning method according to the present embodiment.

### (Learning System)

The learning system 1 is configured using, for example, a computer and executes reinforcement learning on the agent A that controls the control target in an environment which is a virtual space. The control target is, for example, an unmanned aerial vehicle or a steam turbine plant and is not particularly limited. In addition, in the learning system 1, the control target is modeled as a control target model 20, and an operation thereof is simulated in the virtual space. Further, in the following description, the unmanned aerial vehicle is applied as the control target. The agent A is, for example, artificial intelligence (AI). In a case where the control target is the unmanned aerial vehicle, the agent A is an AI pilot.

As shown in Fig. 1, the learning system 1 includes a processing unit 10 and a storage unit 11. The learning system 1 may be configured as a single device or may be configured as a system including a plurality of devices and is not particularly limited.

The processing unit 10 includes, for example, an integrated circuit such as a central processing unit (CPU). The processing unit 10 includes a learning unit 21 and an environment unit 22 and simulates the operation of the control target model 20 in the virtual space. The processing unit 10 outputs an action At of the agent A from the learning unit 21 to the control target model 20. The processing unit 10 simulates the operation of the control target model 20 based on the action At and outputs environment information, which is an operation result of the control target model 20, from the control target model 20 to the environment unit 22. The environment information is, for example, sensor information that is output from various sensors provided in the control target model 20. The processing unit 10 inputs the environment information to the environment unit 22 such that the environment unit 22 outputs a state St and a reward Rt which are calculated on the basis of the environment information to the learning unit 21. The processing unit 10 inputs the state St and the reward Rt to the learning unit 21 and causes the learning unit 21 to execute learning based on the reward Rt and to output the action At based on the state St from the learning unit 21 to the control target model 20.

The learning unit 21 executes a process of learning a policy π for the agent A to perform decision-making and updating the policy π. The policy π is a decision-making model that performs decision-making for deciding a predetermined action At of the agent A on the basis of a predetermined state St. The learning unit 21 includes an action decision unit 31, a policy update unit 32, and an action output unit 33. The action decision unit 31 decides the action At from the policy π on the basis of the state St input from the environment unit 22. The policy update unit 32 executes learning based on the reward Rt given from the environment unit 22 to update the policy π for each evaluation step. In addition, the updated policy π is stored in the storage unit 11. The action output unit 33 calculates a control input to be input to the control target model 20 on the basis of the action At decided by the action decision unit 31 and outputs the calculated control input to the control target model 20.

The environment unit 22 provides an environment to the agent A and the control target model 20. The environment unit 22 includes a state transition determination unit 34, a reward function unit 35, and a state acquisition unit 36. The reward function unit 35 calculates the reward Rt to be given to the agent A on the basis of the action At of the agent A and the environment information of the control target model 20. The state acquisition unit 36 calculates the state St to be input to the agent A on the basis of the environment information input from the control target model 20. The state transition determination unit 34 determines whether or not to advance the evaluation step, which is a step up to the update of the policy π by the learning unit 21, by one step. That is, the state transition determination unit 34 advances the state St and the reward Rt to a state St+1 and a reward Rt+1.

Here, the state transition determination unit 34 will be described. The state transition determination unit 34 defines the update of advancing the evaluation step by one step as event-driven. That is, the event-driven is defined in which a transition of the control target model 20 from a first environment state to a predetermined second environment state when the agent A executes a predetermined action At is defined as an event and an update interval until the evaluation step is advanced by one step is defined as a period until the event occurs. An example of the event is that, in a case where the control target model 20 is an unmanned aerial vehicle and the agent A executes the predetermined action At such that the displacement of an azimuth angle of a right turn is 5 [deg], the displacement of the azimuth angle of the right turn of the unmanned aerial vehicle, which is the control target model 20, is 5 [deg] (second environment state) from an initial position (first environment state) before the right turn. The event-driven is not limited to the above-described event and is appropriately set according to the event executed by the control target model 20.

In addition, the state transition determination unit 34 sets a timeout period in advance. The state transition determination unit 34 updates the policy π in a case where the period until the event occurs exceeds the timeout period. The timeout period is appropriately set according to the event. In addition, the timeout period may be changed according to the environmental conditions, operating conditions, and the like of the control target model 20. For example, in a case where the unmanned aerial vehicle which is the control target model 20 is turned to the right by 5 [deg], the timeout period may be set to be longer as the altitude is higher.

The storage unit 11 is any storage device such as a semiconductor storage device or a magnetic storage device. The storage unit 12 stores various programs and various types of data. The storage unit 11 stores a learning program P for performing reinforcement learning on the agent A as the various programs. In addition, the storage unit 12 stores the policy π as the various types of data. The policy π to be stored is stored each time learning is updated. Further, the set event-driven and timeout period may be stored as the various types of data.

### (Learning Method)

Next, a learning method performed by the execution of the learning program P by the learning system 1 will be described with reference to Fig. 2. In the learning method, first, the processing unit 10 initializes various settings in reinforcement learning (Step S1). In Step S1, for example, the evaluation step is set to an initial value, or the elapsed environment time (simulation time) in the environment is initialized.

Then, in the learning method, the learning unit 21 of the processing unit 10 acquires the state St from the initialized environment unit 22 (Step S2). Then, in the learning method, the learning unit 21 selects the action At from the policy π on the basis of the state St and outputs the action At to the control target model 20 (Step S3). The processing unit 10 advances the operation of the control target model 20 by a unit time of the simulation time on the basis of the action At (Step S4). Then, the state transition determination unit 34 of the environment unit 22 determines whether or not the displacement of the environment state of the control target model 20 corresponding to the action At has occurred, that is, whether or not the event has occurred (Step S5). When determining that the displacement corresponding to the action At has occurred (Step S5: Yes), the state transition determination unit 34 advances the evaluation step by one step. In response to this, the state acquisition unit 36 calculates the state St+1 from the environment information output from the control target model 20 on the basis of the action At and outputs the state St+1 to the learning unit 21, and the reward function unit 35 calculates the reward Rt+1 for the action At and outputs the reward Rt+1 to the learning unit 21 (Step S7).

On the other hand, when determining that the displacement corresponding to the action At has not occurred (Step S5: No), the state transition determination unit 34 determines whether or not the timeout period has elapsed (Step S6). Specifically, in Step S6, the state transition determination unit 34 determines the lapse of the timeout period on the basis of whether or not the simulation time in the environment is longer than the timeout period. When the state transition determination unit 34 determines that the timeout period has elapsed (Step S6: Yes), Step S7 is executed. On the other hand, when the state transition determination unit 34 determines that the timeout period has not elapsed (Step S6: No), the process proceeds to Step S4, and Step S4 is executed again.

After the execution of Step S7, the learning unit 21 executes learning based on the action At and the state St, the state St+1, and the reward Rt+1 acquired from the environment unit 22 to update the policy π (Step S8). Then, the processing unit 10 determines whether or not to end the learning (Step S9) and ends the reinforcement learning on the agent A when determining to end the learning (Step S9: Yes). On the other hand, when determining not to end the learning (Step S9: No), the processing unit 10 proceeds to Step S2 and repeatedly executes Steps S2 to S9 while advancing the evaluation step until the learning is ended, using the state St+1 calculated in Step S7 as the state St of the new evaluation step.

### (Autonomous Control Device)

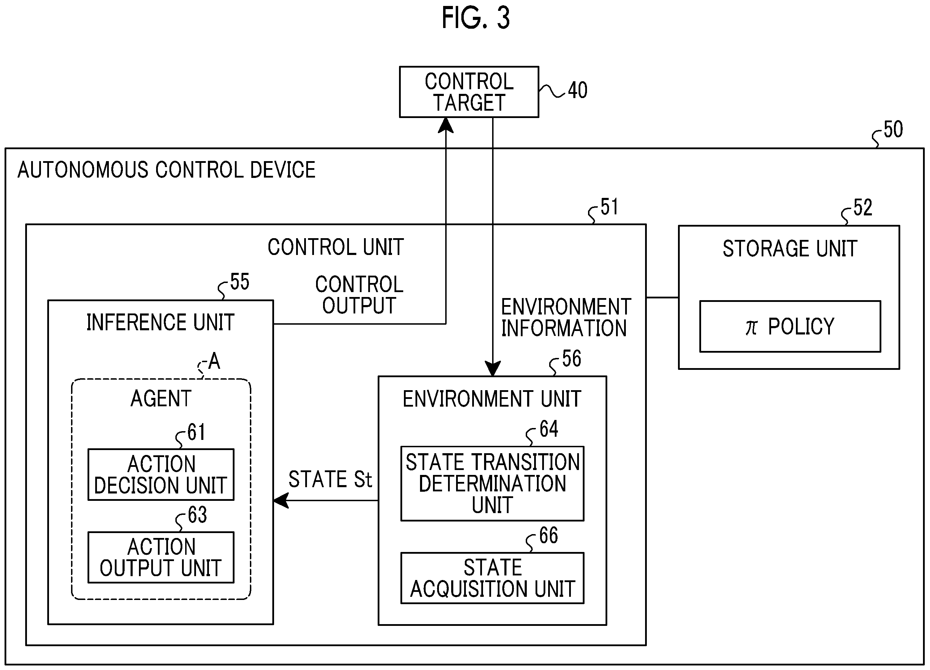

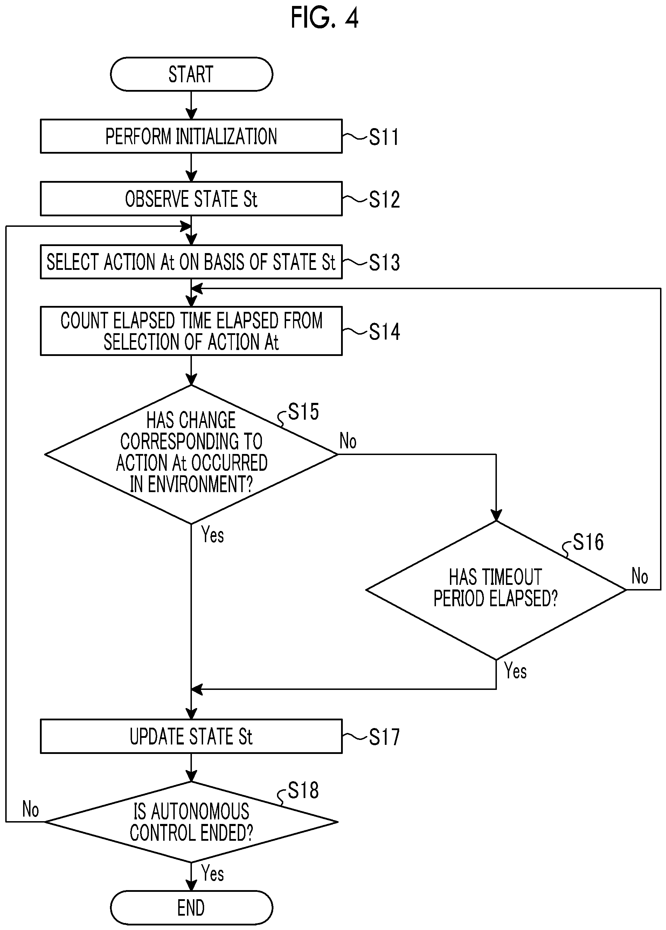

Next, an autonomous control device will be described with reference to Figs. 3 and 4. Fig. 3 is a diagram schematically showing the autonomous control device according to the present embodiment. Fig. 4 is a diagram showing a flow related to autonomous control according to the present embodiment.

An autonomous control device 50 according to the present embodiment is a device in which a control unit 51 controls a control target 40 using the policy π learned by the learning system 1. In addition, the control target 40 is a real object that operates in a real space.

As shown in Fig. 3, the autonomous control device 50 includes the control unit 51 and a storage unit 52. The control unit 51 includes an integrated circuit, such as a central processing unit (CPU), similarly to the processing unit 10. The control unit 51 includes an inference unit 55 and an environment unit 56 and controls an operation of the control target 40 in the real space. The control unit 51 outputs a control output based on the action At of the agent A from the inference unit 55 to the control target 40. The control target 40 executes an operation based on the control output and outputs environment information, which is an operation result, to the environment unit 56 of the control unit 51. The environment unit 56 outputs the state St calculated on the basis of the environment information from the environment unit 56 to the inference unit 55. The inference unit 55 decides the action At from the policy π on the basis of the state St and outputs a control output based on the decided action At to the control target 40. The control unit 51 repeatedly executes the step from the output of the control output from the inference unit 55 to the control target 40 to the output of the state St from the environment unit 56 as an execution step.

The inference unit 55 executes the action At based on the state St using the policy π learned in the learning system 1. The inference unit 55 includes an action decision unit 61 and an action output unit 63. In addition, since the action decision unit 61 and the action output unit 63 are the same as the action decision unit 31 and the action output unit 33 of the learning system 1, a description thereof will be omitted. In the inference unit 55, the action decision unit 61 decides the action At from the policy π on the basis of the state St input from the environment unit 56, and the action output unit 63 calculates the control output to be input to the control target 40 on the basis of the action At decided by the action decision unit 61 and outputs the calculated control output to the control target 40.

The environment unit 56 provides an environment to the agent A. The environment unit 56 includes a state transition determination unit 64 and a state acquisition unit 66. In addition, since the state transition determination unit 64 and the state acquisition unit 66 are the same as the state transition determination unit 34 and the state acquisition unit 36 of the learning system 1, a description thereof will be omitted. In addition, the state transition determination unit 34 of the learning system 1 calculates the state St+1 and the reward Rt+1. However, the state transition determination unit 64 of the autonomous control device 50 may perform a process that calculates the state St+1 and the reward Rt+1, but does not use the calculated state St+1 and reward Rt+1 to update the policy π, may perform a process that does not calculate the state St+1 and the reward Rt+1, or may perform any process. In the environment unit 56, the state transition determination unit 64 determines whether or not the event has occurred on the basis of the environment information acquired from the control target 40, and the state acquisition unit 66 calculates the state St to be input to the agent A on the basis of the environment information acquired from the control target 40.

Next, an autonomous control method for the control target 40 executed by the autonomous control device 50 will be described with reference to Fig. 4. In the autonomous control method, first, the control unit 51 initializes various settings in the autonomous control (Step S11). In Step S11, for example, the execution step is set to an initial value.

Then, in the autonomous control method, the inference unit 55 of the control unit 51 acquires the state St from the initialized environment unit 56 (Step S12). Then, in the autonomous control method, the inference unit 55 selects the action At from the policy π on the basis of the state St and outputs the control output based on the selected action At to the control target 40 (Step S13). The control target 40 executes an operation based on the control output, and the control unit 51 counts an elapsed time elapsed from the selection of the action At (Step S14). Then, the state transition determination unit 64 of the environment unit 56 determines whether or not the displacement of the environment state of the control target 40 corresponding to the action At has occurred, that is, whether or not the event has occurred (Step S15). When the state transition determination unit 64 determines that the displacement corresponding to the action At has occurred (Step S15: Yes), the state acquisition unit 66 calculates the state St from the environment information output from the control target 40 on the basis of the action At and outputs the state St to the inference unit 55 (Step S17).

On the other hand, when determining that the displacement corresponding to the action At has not occurred (Step S15: No), the state transition determination unit 64 determines whether or not the timeout period has elapsed (Step S16). Specifically, in Step S16, the state transition determination unit 64 determines whether or not the timeout period has elapsed on the basis of whether or not the elapsed time elapsed from the selection of the action At is longer than the timeout period. When the state transition determination unit 64 determines that the timeout period has elapsed (Step S16: Yes), Step S17 is executed. On the other hand, when the state transition determination unit 64 determines that the timeout period has not elapsed (Step S16: No), the process proceeds to Step S14, and Step S14 is executed again.

After the execution of Step S17, the control unit 51 determines whether or not to end the autonomous control (Step S18) and ends the autonomous control when determining to end the autonomous control of the control target 40 by the agent A (Step S18: Yes). On the other hand, when determining not to end the autonomous control (Step S18: No), the control unit 51 proceeds to Step S13 and repeatedly executes Step S13 to Step S18 until the autonomous control is ended.

In addition, the autonomous control device 50 determines the occurrence of the event using the state transition determination unit 64. However, a configuration in which the state transition determination unit 64 is omitted may be adopted. That is, the state St and the action At may be updated each predetermined unit time without determining the occurrence of the event.

As described above, for example, the learning system 1, the learning method, the learning program P, and the autonomous control device 50 described in the present embodiment are understood as follows.

The learning system 1 according to a first aspect includes the processing unit 10 that performs reinforcement learning on the agent A that controls the control target model 20. The processing unit 10 repeatedly executes, as an evaluation step, a step up to updating the policy π on the basis of the reward Rt obtained by the execution of a predetermined action At by the agent A in a predetermined state St in a predetermined environment, and the update of the evaluation step is defined as event-driven in which the transition of the control target (control target model 20) from a first environment state to a predetermined second environment state when the agent A executes the predetermined action At is defined as an event.

According to this configuration, it is possible to update the evaluation step each time the event occurs. Therefore, it is possible to reduce reinforcement learning using similar learning data and to reduce the frequency of update. As a result, it is possible to improve learning efficiency.

As a second aspect, in the update of the evaluation step, a predetermined timeout period is set, and the processing unit 10 updates the policy π in a case where the event exceeds the timeout period.

According to this configuration, even in a case where the time until the event occurs is long or the event does not occur, it is possible to update the evaluation step.

A learning method according to a third aspect is executed in the learning system 1 that performs reinforcement learning on the agent A that controls the control target model 20 and includes causing the learning system 1 to repeatedly execute, as an evaluation step, a step up to updating the policy π on the basis of the reward Rt obtained by the execution of a predetermined action At by the agent in a predetermined state St in a predetermined environment, and the update of the evaluation step is defined as event-driven in which a transition of the control target model 20 from a first environment state to a predetermined second environment state when the agent A executes the predetermined action is defined as an event.

According to this configuration, it is possible to update the evaluation step each time the event occurs. Therefore, it is possible to reduce reinforcement learning using similar learning data and to reduce the frequency of update. As a result, it is possible to improve learning efficiency.

A learning program P according to a fourth aspect is executed in the learning system 1 that performs reinforcement learning on the agent A that controls the control target model 20 and causes the learning system 1 to repeatedly execute, as an evaluation step, a step up to updating the policy π on the basis of the reward Rt obtained by the execution of a predetermined action At by the agent A in a predetermined state St in a predetermined environment, and the update of the evaluation step is defined as event-driven in which a transition of the control target model 20 from a first environment state to a predetermined second environment state when the agent A executes the predetermined action At is defined as an event.

According to this configuration, it is possible to update the evaluation step each time the event occurs. Therefore, it is possible to reduce reinforcement learning using similar learning data and to reduce the frequency of update. As a result, it is possible to improve learning efficiency.

The autonomous control device 50 according to a fifth aspect includes the control unit 51 in which the agent A controls the control target 40 on the basis of a learned policy π. The control unit 51 repeatedly executes, as an execution step, a step up to when the agent A selects a predetermined action At from the policy π on the basis of an environment state of the control target 40 and outputs the predetermined action, and update of the execution step is defined as event-driven in which a transition of the control target 40 from a first environment state to a predetermined second environment state when the agent A executes the predetermined action At is defined as an event.

According to this configuration, it is possible to update the execution step each time the event occurs. Therefore, it is possible to reduce the frequency of update of the execution step and thus to reduce control load.

### Reference Signs List

1 Learning System
10 Processing unit
11 Storage unit
20 Control target model
21 Learning unit
22 Environment unit
31 Action decision unit
32 Policy update unit
33 Action output unit
34 State transition determination unit
35 Reward function unit
36 State acquisition unit
40 Control target
50 Autonomous control device
51 Control unit
52 Storage unit
55 Inference unit
56 Environment unit
61 Action decision unit
63 Action output unit
64 State transition determination unit
66 State acquisition unit
A Agent
π Policy

## Claims

1. A learning system comprising:
a processing unit that performs reinforcement learning on an agent that controls a control target,
wherein the processing unit repeatedly executes, as an evaluation step, a step up to updating a policy on the basis of a reward obtained by execution of a predetermined action by the agent in a predetermined state in a predetermined environment, and
update of the evaluation step is defined as event-driven in which a transition of the control target from a first environment state to a predetermined second environment state when the agent executes the predetermined action is defined as an event.

2. The learning system according to claim 1,
wherein, in the update of the evaluation step, a predetermined timeout period is set, and
the processing unit updates the policy in a case where the event exceeds the timeout period.

3. A learning method executed in a learning system that performs reinforcement learning on an agent that controls a control target, the learning method comprising:
causing the learning system to repeatedly execute, as an evaluation step, a step up to updating a policy on the basis of a reward obtained by execution of a predetermined action by the agent in a predetermined state in a predetermined environment,
wherein update of the evaluation step is defined as event-driven in which a transition of the control target from a first environment state to a predetermined second environment state when the agent executes the predetermined action is defined as an event.

4. A learning program executed in a learning system that performs reinforcement learning on an agent that controls a control target, the learning program causing the learning system to repeatedly execute, as an evaluation step, a step up to updating a policy on the basis of a reward obtained by execution of a predetermined action by the agent in a predetermined state in a predetermined environment,
wherein update of the evaluation step is defined as event-driven in which a transition of the control target from a first environment state to a predetermined second environment state when the agent executes the predetermined action is defined as an event.

5. An autonomous control device comprising:
a control unit in which an agent controls a control target on the basis of a learned policy,
wherein the control unit repeatedly executes, as an execution step, a step up to when the agent selects a predetermined action from the policy on the basis of an environment state of the control target and outputs the predetermined action, and update of the execution step is defined as event-driven in which a transition of the control target from a first environment state to a predetermined second environment state when the agent executes the predetermined action is defined as an event.
